# EUROPEAN PATENT SPECIFICATION

(11) **EP 0 811 976 B1**
(45) Date of publication and mention of the grant of the patent: **11.12.2002**
(21) Application number: 97870075.5
(22) Date of filing: 28.05.1997
(51) Int. Cl.: G11B 33/04

(54) **Device for the storage, transfer of information carriers**
Gerät zur Lagerung, Übertragung von Informationsträgern
Appareil pour le stockage, transfert de supports d'information

(30) Priority: 05.06.1996 BE 9600507
(43) Date of publication of application: 10.12.1997
(73) Proprietor: STAAR SOCIETE ANONYME, B-1200 Bruxelles (BE)
(72) Inventor: d'Alayer de Costemore d'Arc Stéphane, André M., 1474 Ways (BE)
(74) Representative: Overath, Philippe

(56) References cited:
- WO-A-93/16471
- DE-A- 3 728 113
- GB-A- 589 187
- US-A- 4 510 591
- US-A- 4 664 454
- US-A- 4 682 320
- US-A- 4 702 533
- US-A- 4 770 474
- US-A- 5 163 040
- US-A- 5 366 073

## Description

The present invention relates to a device for the storage, transfer of information carriers such as a compartment, housing incorporating means holding said information carrier in a storage, loaded position and transferring it to a position outside said compartment or housing. It concerns more particularly information carriers having surfaces particularly sensitive to scratches, finger prints, dust,... which may affect their playback/recording quality, for instance those having a circular periphery, such as compact discs, optical/magnetic discs. The main aim of this invention is to present said information carrier well outside the storage compartment to allow it to be picked up, by the user or the powered loading mechanism of a record/playback apparatus, by its periphery and/or its central hole in order to avoid any contact with its surfaces.

The storage devices so-called "jewel" boxes having a pivoting cover are the only ones meeting with the above criteria but cannot be used by powered mechanisms. Further, they are quite bulky as requiring a large space for the opening of their cover and, as they necessitate the use of both hands, they are not appropriate at all for being handled by drivers to extract a disc.

All other storage devices available from the market and more particularly those designed for car uses are of the so-called "drawer" type but they only allow the discs to protrude by a very limited distance, thus forcing the user to grasp them between thumb and fore finger, which results in unavoidable but undesirable contacts with the disc surfaces. A typical example of such devices is disclosed in the German Patent 37 28 113 C2.

The device disclosed in the UK Patent 589.187 allows the disc to protrude to a greater extent outside the storage compartment but its size is bulky due to pivoting movement of the disc support.

The co-assigned US Patent 4,664,454 discloses a device which is more compact than the above-mentioned ones but the disc must be inserted in a skewed way and this is not always easy or appropriate because the requested space is not always available where the device is installed.

US Patent 4 682 320 discloses a disc player into/from which a disk can be inserted/removed in a rolling movement by a roller device with a high coefficient of friction which engages the peripheral edge of the disc.

The aim of the present invention is thus to cope with the above-mentioned drawbacks by proposing a storage, transfer device which is compact, simple, of low cost, easy to work-out, holds the information support in storage position and transfers it from a position entirely inside the compartment to a pick-up, loading position where a major portion of it is outside the compartment.

A related aim of the invention is to propose a device which induces the user not to touch the surfaces of the information support; more particularly for discs, the invention induces the user or allows the loading mechanism to handle the information support by its periphery and/or central hole.

A further aim is to offer a device of a size just slightly larger than that of the information support.

A further aim is to offer a device easy and simple to operate.

A further aim is to propose simple means which indicate the presence of an information support within a storage compartment without contacting its information surfaces.

Another aim of the invention is to provide a storage, transfer device which is suitable for a single compartment storage for a single information support unit and a stack of or multiple compartments in a magazine type storage unit.

In view of achieving those aims, the device of the present invention is essentially characterized by the content of its independent claim.

The invention will be apparent from the following detailed description, given in a non-limiting way, of three preferred embodiments to which various improvements can be made and for which :
- Fig. 1 is a top view of a first embodiment of the invention incorporated in a storage compartment for a disc, in storage position and without cover,
- Fig. 2 is a lateral view of the device shown on Fig. 1 with its cover and additional adjacent compartments illustrated in dashed lines,
- Fig. 3 is similar to Fig. 1, the device being in the pick-up, loading position,
- Fig. 4 is an enlarged lateral view of a particular element of Fig. 1,
- Fig. 5 is a detail of alternative profiles,
- Fig. 6 is a top view of a second embodiment of the invention which is combined with the loading system of a single disc unit, shown in play position,
- Fig. 7 is similar to Fig. 6, with the unit in its pick-up or unloaded position,
- Fig. 8 is a partial top view of a third embodiment of the invention for a multiple compartment magazine and combined with a disc unit to provide a disc changer,
- Fig. 9 is similar to Fig. 8 with the disc transfer mechanism and the disc protruding outside the magazine,
- Fig. 10 is a fragmentary sectional view taken in the plane of lines A-A of Fig. 9, and
- Fig. 11 is a slightly enlarged fragmentary sectional view taken in the plane of lines B-B of Fig. 9.

For simplicity purposes, in all figures, only the elements necessary for the understanding of the invention have been shown, and any element common to the various embodiments bear the same reference.

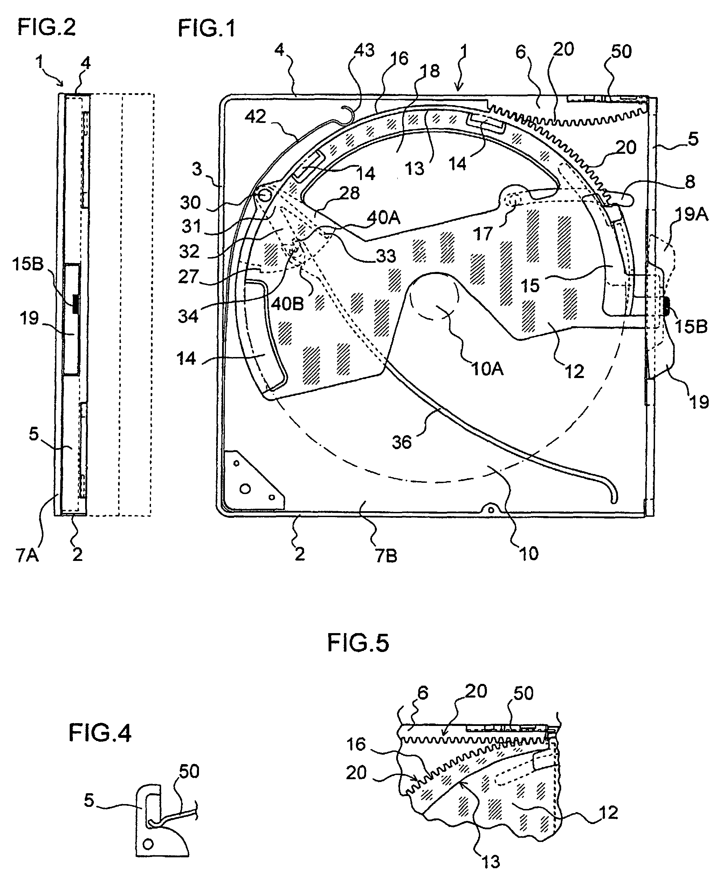

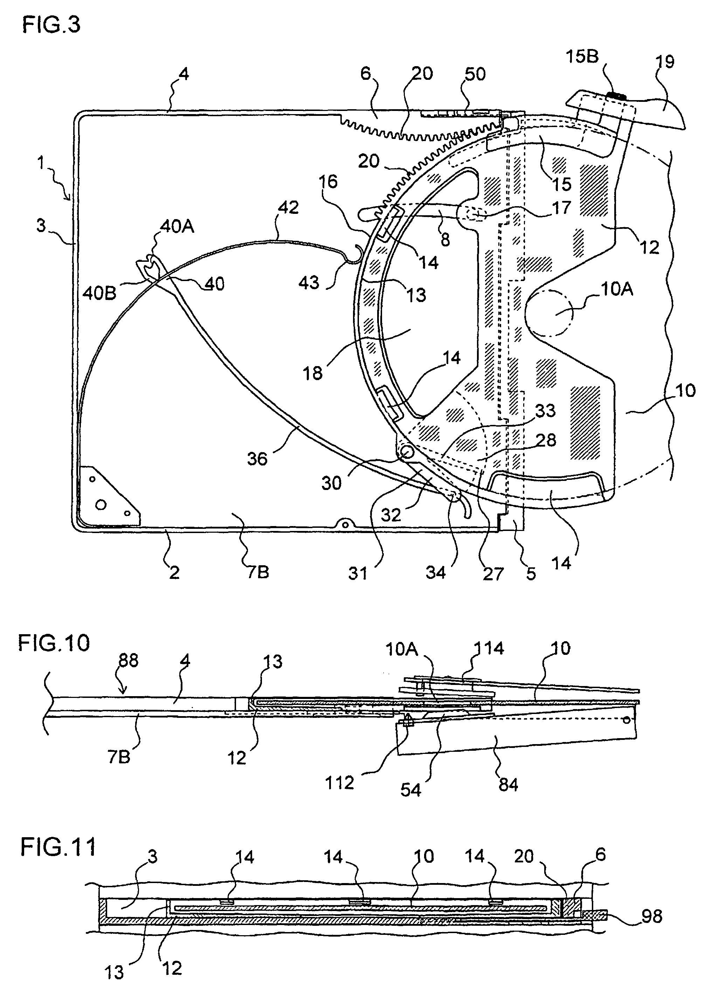

As shown on Figs. 1 to 5, in a first embodiment, the device of the invention is incorporated in a housing, compartment for storing a single disc or in multiple adjacent compartments (three being shown on Fig. 2) for a plurality of discs. In either case, the device is incorporated in a housing 1 having an almost parallelepipedic shape with lateral walls 2, 3 and 4, a front wall being a door 5 which can pivot for allowing insertion, removal of a disc 10 (shown in dotted line) and is kept in closed position by a spring 50 (Fig. 4), a bottom wall 7B and a cover 7A.

In carrying the invention, the device comprises a mobile support 12 which has the shape of a sector of approximately 250° with a peripheral internal arch or edge 13 having the same curvature as the disc 10. Fixed legs 14 along the edge 13, keep the periphery of the disc 10 pressed against the upper surface of said support 12, which is preferably V-shaped as described in the co-assigned US Patent 4.510.591, to prevent any contact with the surface of the disc except at its periphery. A flexible leg 15, positioned laterally and flexing towards the center of the support 12, cooperates with the periphery of a disc 10 to press it against the edge 13 in order to lock the disc in storage position and during transfer to secure it against movement from shock or vibration.

Further, in carrying out the invention, a portion of the external edge 16 of the support 12 cooperates with an element 6 of the lateral wall 4; in the most preferred embodiment, the element 6 has a slightly curved profile and bears gears 20 identical to those which equip a portion of the external edge 16 so that the support 12 rolls on the element 6 without sliding.

The support 12 bears on its lower surface a stud 17 which cooperates with a groove 8 provided in the bottom wall 7B to guide its rolling movement and maintain the gears 20 in mesh, while at its periphery it bears a shaft 30 around which pivots a fork 31 having two prongs. The first prong 32 bears a stud 34 guided by the groove 36 provided in the bottom wall 7B; the second prong 33 being flexible and cooperating with the edge 27 of a depression 28 within the lower surface of the support 12. The left extremity 40 (Fig. 3) of the groove 36 has a particular shape : one part 40A serves as a ratchet to lock the stud 34 and thus the support 12 in the position shown on Fig. 1, the other part 40B drives the stud 34 back to the groove 36 to let the support undergo the action of resilient means such as the leaf-spring 42, of which a rounded extremity 43 abuts against the non-geared portion of its external edge 16; its other extremity being fixed at the corner of the lateral walls 2, 3.

When a disc 10 is stored in the housing 1, all the above-described elements are in the stable position shown on Fig. 1. The extremity 15B of the flexible leg 15 is pushed by the periphery of the disc 10 out of the housing 1 and thus protrudes from the edge 19 of the support 12 and the door 5, indicating in a visual and tactile way the presence of a disc without any contact with its information surfaces.

To open the housing, the user must just slightly push the edge 19 which serves as a control button towards the inside of the housing, in fact, as a result, the support 12 slightly pivots around its studs 17 against the resistance of the leaf-spring 42 and the stud 34 clears the ratchet 40A to travel in the portion 40B then the groove 36. Under the action of the leaf-spring 42, the support 12 pivots the door 5 downwards, against the action of the spring 50, then starts to roll outside the housing 1 while being controlled by the meshing of the gears 20 on its external edge 16 and the element 6.

Simultaneously, the profile of the groove 36 drives the stud 34 laterally to pivot the fork 31 clockwise (Fig. 3). Preferably, this pivoting is resisted frictionally to avoid the support 12 speeding up as it moves. Then, the prong 33 abuts against the edge 27 and is slightly deformed for further slowing down the movement of the stud 34 and thus of the support 12 to ensure a gentle stop in the eject position (Fig. 3) where the disc 10 can be picked-up by the user. To reduce the inertia of the support 12, an aperture 18 is provided in it. Thanks to the device of the invention, more than half of the disc is located outside the housing 1 and this allows the disc to be easily grasped by its periphery and/or central hole 10A. This eject position is provided by the curved profile of the element 6 which also allows the housing 1 to have a compact shape. A similar result can be obtained with a linear profile of the element 6 (Fig. 5) while the curvature of the external edge 16 of the support 12 then deviates from that of its internal edge 13.

To close the housing, the user must simply push the edge 19 or control button towards the inside of the housing. As a result, the support 12 pivots and rolls without sliding thanks to the meshing of the gears 20, against the action of the leaf-spring 42. At the end, the stud 34 engages the part 40A which serves as a ratchet and accordingly the support 12 is locked in its storage position (Fig. 1); the door 5 being closed by the action of the spring 50.

Thanks to this specific movement (rolling without sliding) of the support 12, the housing 1 is almost as compact as a storage box with a pivoting cover and such feature is of great importance for car applications where the available space is quite restricted. Further, such a compact size allows the storage compartment to be quite rigid and thus no reinforcement or specific design which would increase costs is required.

In addition, the storage, housing 1 is of a reduced thickness and accordingly a greater number of them can be provided in a specific volume. To avoid that adjacent edges or control buttons 19 overlay each other and be uneasy to distinguish, they are, in the most preferred embodiment, offset symmetrically (left and right ones, Fig. 1 - 19 and 19A in dashed lines) so that they overlay only in their central part.

When no disc is on a support 12, then the flexible leg 15 is pivoted inside the housing 1, thus its extremity 15B does not protrude through the door 5 of the compartment; as a result it is neither visible nor present. Such a visual and tactile indication of presence, resp. absence of a disc is particularly advantageous for storage compartments mounted, incorporated in cars or for disabled people as the user can easily be aware of the absence or presence of a disc to either look for an empty compartment to store a disc or select another disc. Further, by being located within the control button 19, it allows the user to directly actuate the selected support 12.

In the preferred embodiment, it is much more preferable to use grooves 8, 36 than slots because it has been observed that with an almost closed housing 1, when the support 12 pivots towards the outside, a suction is produced in the space between the walls 2, 3, 4 and the external edge 16, as the height of said edge almost corresponds to the internal thickness of said housing, which causes a slow down of the outwards movement of the support and thus the flexibility of the prong 33 of the fork 31 can be increased to provide a smoother stoppage of the support 12 in its eject position.

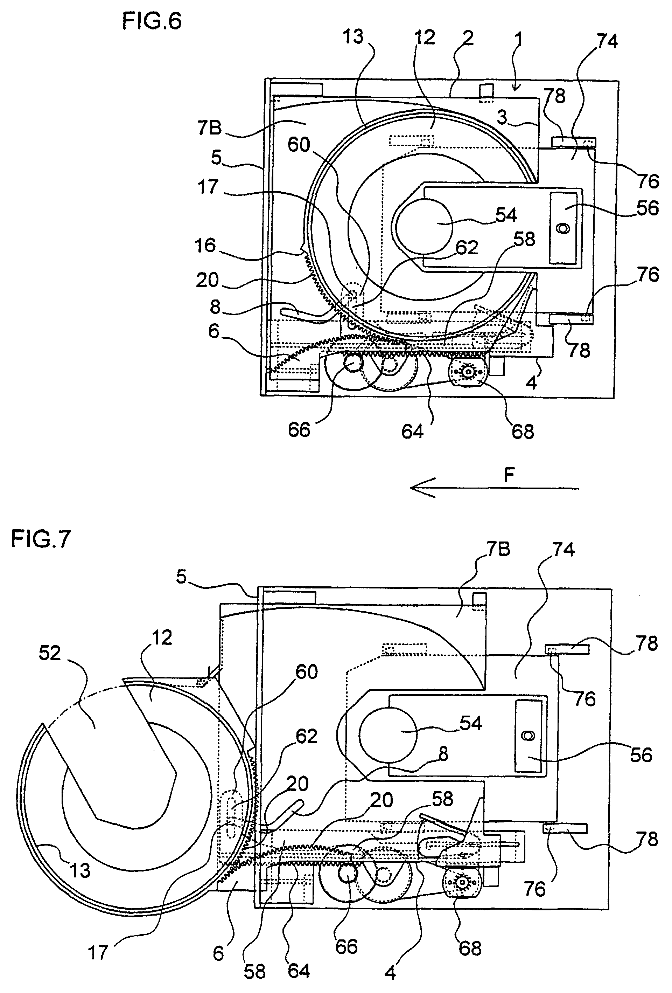

Now turning to Figs. 6, 7, in this particular embodiment the disc storage, transfer mechanism according to the invention is incorporated in a disc loading system for the so-called "drawer" type units in order to reduce their depth and make them more compact. In fact, such "drawer" type systems incorporate lateral supports which occupy a large volume when said drawers are inside the unit and thus their depth is quite large.

As shown, the player/recorder unit comprises a drawer, housing 1 providing a compartment having peripheral walls 2, 3, 4 front 5 and bottom 7B walls with a circular support 12 having a radial opening 52 to let the disc driving 54 and optical playback/recording 56 means access and scan the disc. The support 12 is preferably cup-shaped while its edge 13 ensures proper centering of a disc laid down by the user and holds it during its transfer.

The lateral wall 4 also bears a curved element 6 having gears 20 identical to those of the external edge 16 of the support 12 while the stud 17 of the support travels in the groove 8 provided in the bottom wall 7B.

A mobile slider 58 supported by the bottom 7B and lateral 4 walls bears a leg 60 having a groove 62 which engages the stud 17 while gears 64 provided on said slider mesh with the output gear 66 of powered means controlled by a motor 68 to drive said slider 58 back and forth.

When the mechanism is in its closed, play position, all the above elements are in the position shown on Fig. 6. One shall note the small depth of this unit which is just slightly larger than the diameter of a disc 10.

When the motor 68 is powered, first the disc driving 54 and optical 56 means which are mounted on a movable frame 74 guided by lateral studs 76 cooperating with inclined ramps 78 are lowered to a non-interfering position while the bottom wall 7B is slightly displaced, then the slider 58 is translated in the direction of the arrow F (Fig. 6). As a result, the groove 62 moves the stud 17 forwards while it travels along the groove 8 for rolling the support 12 without sliding as described in the first embodiment, thanks to the gears 20 provided on the element 6 and the edge 16.

Then, the support 12 reaches the position shown on Fig. 7 where the user can easily pick-up a disc 10 by its central hole, periphery or lay down a disc; no contact being made to the information surfaces of the disc.

When the unit is in the loading position shown on Fig. 7 and a disc is to be set in operative position after having been laid down on the support 12, the motor 68 is actuated in the reverse direction and the slider 58 translated inwardly. After the support 12 has been driven fully inside the unit by performing the here-above described steps in the reverse order, the bottom wall 7B is displaced to bring the disc driving 54 and optical 56 means in operative position to scan said disc. In the described embodiment, the slider 58, near its end of movement, engages the frame 74 supporting the disc driving 54 and optical means 56 which is then raised by the inclined ramps 78 guiding its lateral studs 76. The disc being raised above the level of the support 12, it can rotate freely.

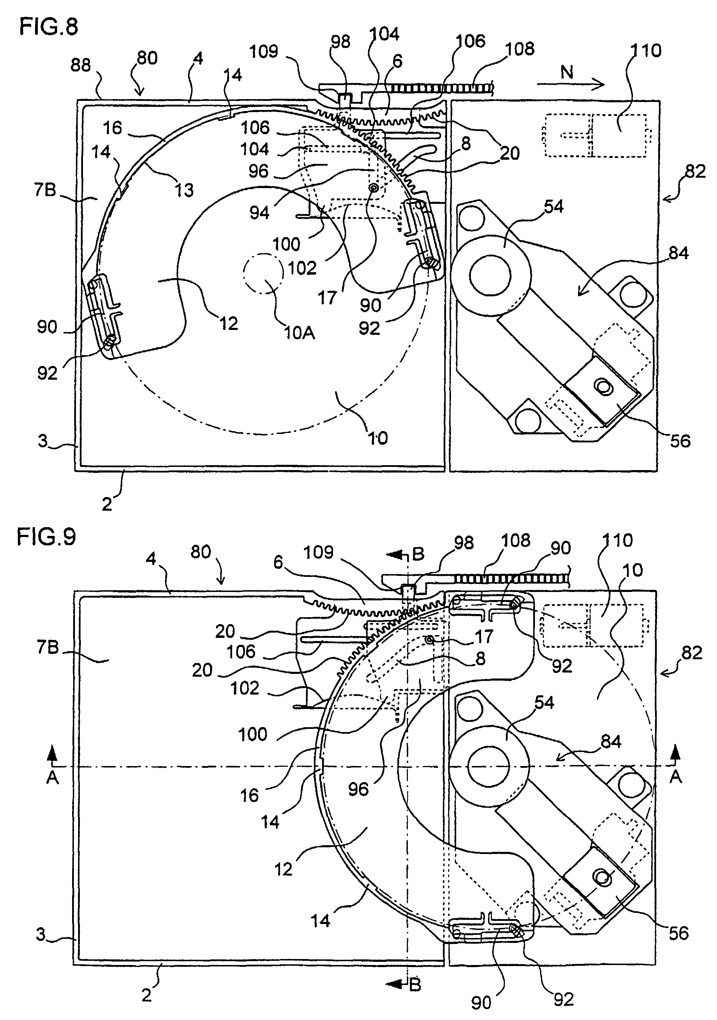

Now, turning to the third embodiment described in Figs. 8 to 11, the device which is the object of the invention is incorporated in a disc changer and more particularly a CD or DVD changer. For simplicity sake, only one disc compartment and the very bare CD mechanism have been represented as otherwise the drawings would be confusing.

The changer basically comprises two main elements: the disc cartridge 80 which houses a number (f.i. 5 to 12) of discs 10 and which can be inserted in or removed from the changer and the player frame 82 which supports, among others, a pivotable (Fig. 10) chassis 84 bearing the disc driving 54 and optical 56 means; said frame 82 being vertically movable with respect to the disc cartridge 80 so that it can be positioned in alignment with the disc 10 selected for playback or recording.

The disc cartridge 80 comprises several disc compartments mounted on top one another but as shown on Figs. 8 to 11, only one compartment 88 is represented. Each compartment 88 includes peripheral walls 2, 3, 4, a bottom wall 7B and a disc support 12 which, again, is made of a sector which can roll without sliding with respect to the lateral wall 4 as a portion of its external edge 16 bears gears 20 meshing with those of a portion 6 of the lateral wall 4.

In this embodiment, the support 12 has a semi-annular shape close to that shown on Fig. 1 to allow loading of a disc 10 on its disc driving 54 and optical 56 means. On two diametrically opposed positions, the support 12 bears disc retaining means 90, each consisting of a flexible leg bearing a cone-shaped stud 92 cooperating with the periphery of a disc 10 to push it against the internal edge 13 and thus lock it against movement, vibration when in storage position or during transfer.

The support 12 bears a stud 17 engaging simultaneously the groove 8 provided in the bottom wall 7B of the compartment 88 and a groove 94 provided in a slider 96 located inbetween said support 12 and bottom wall 7B. Said slider 96 has one operative end, edge 98 protruding slightly from the wall 4, the opposite end 100 cooperating with resilient means 102 in the bottom wall 7B of the compartment to provide said slider 96 with two stable positions (Figs. 8, 9). The slider 96, by performing back and forth linear movements guided by studs 104 on said slider engaging grooves 106 provided in the bottom wall 7B, powers movement of the disc support 12 in/or outside the compartment 88 under control of the meshing gears 20.

To allow loading of the cartridge 80 within the changer unit, the player frame 82 is positioned at its lowest level. Once a disc is selected, either manually or automatically, the frame 82 is moved upwards so that the movable arm 108 engages the operative edge 98 of the slider 96 controlling the support 12 of the selected disc 10. Then, the arm 108 is moved in the direction of the arrow N (Fig. 8) by gear trains powered by a micro-motor 110 and its notch 109, by engaging the edge 98 of the slider 96, translates it for powering rotation, without sliding, of the support 12 as its stud 17 is driven by the intersection of the grooves 8 and 94.

As a result, the selected disc 10 reaches the position shown on Fig. 9 and further translation of the mechanism (not shown) driving the arm 108 powers a pivotal movement of the chassis 84 (Fig. 10). Said chassis bears cone-shaped studs 112 which engage the flexible disc retaining means 90 to force them to pivot their studs 92 away from the periphery of the disc 10 to release it. Simultaneously, clamping means 114 are pivoted to clamp the disc 10 on the driving means 54 which, preferably, are also cone-shaped to ensure centering of the disc which is then slightly moved away from the internal edge 13 of the support 12. The disc 10 being totally free for rotation, disc recording or reproduction operations can take place.

When another disc is selected or the magazine must be removed, then the movement of the arm 108 is reversed and all the here-above described operations are performed in just the reverse order. Disc clamping means 114 are pivoted to inoperative position, simultaneously, the chassis 84 is pivoted downwards so that the cone-shaped studs 112 release the disc retaining means 90, which by pivoting back their studs 92 towards the periphery of the disc 10 push it against the internal edge 13 of the support 12 for locking said disc against any movement, vibration during transfer and in storage position.

Then, backwards translation of the arm 108 is transmitted to the slider 96 which drives the support 12 back to its storage position shown on Fig. 8.

To load or unload discs in the cartridge 80, once removed from the changer, the user just actuates the operative edge 98 of the slider between its two stable positions shown on Figs. 8 and 9.
- 1: housing
- 2: lateral wall
- 3: lateral wall
- 4: lateral wall
- 5: door
- 6: element
- 7A: cover
- 7B: bottom wall
- 8: groove
- 10: information carrier, disc
- 10A: central hole
- 12: mobile support
- 13: internal edge
- 14: fixed legs
- 15: flexible leg
- 15B: extremity of 15
- 16: external edge
- 17: stud
- 18: aperture
- 19: edge or control button
- 19A: button
- 20: gears
- 27: edge of 28
- 28: depression
- 30: shaft
- 31: fork
- 32: prong
- 33: prong
- 34: stud of 32
- 36: groove
- 40: left extremity of 36
- 40A: part of 40 (ratchet)
- 40B: other part of 40
- 42: leaf-spring
- 43: rounded extremity of 42
- 50: spring
- 52: opening
- 54: driving means
- 56: optical means
- 58: mobile slider
- 60: lateral leg
- 62: groove
- 64: gears
- 66: output gear
- 68: motor
- 74: movable frame
- 76: studs
- 78: ramps
- 80: cartridge
- 82: frame
- 84: pivotable chassis
- 88: compartment
- 90: retaining means
- 92: stud
- 94: groove
- 96: slider
- 98: end of 96
- 100: opposite end of 96
- 102: resilient means
- 104: studs
- 106: grooves
- 108: arm
- 109: notch
- 110: micro-motor
- 112: studs
- 114: clamping means

## Claims

1. Storage and transfer device for a disc-like information carrier (10) comprising a housing (1, 88) including walls (2, 3, 4, 7B) and a support (12) receiving a portion of the periphery of said information carrier (10), said support being mobile in a plane substantially parallel to a wall (7B) of said housing (1), **characterized in that** it includes means (20, 8, 17) ensuring a rolling movement without sliding of the support (12) with respect to said housing (1).

2. Device according to claim 1, **characterized in that** the rolling movement of the support (12) is guided by a stud (17) on said support engaging a groove (8) in the wall (7B) of the housing (1) parallel to said support (12).

3. Device according to any of the preceding claims, **characterized in that** the rolling movement of the support (12) is controlled by peripheral gear-teeth located on its external edge (16) and on an element (6) of a peripheral wall (4).

4. Device according to claim 3, **characterized in that** the element (6) has a curved profile.

5. Device according to claim 3, **characterized in that** the element (6) has a rectilinear profile and the external edge (16) of the support (12) a curvature different from that of its internal edge (13).

6. Device according to claim 4 or 5, **characterized in that** the profiles of the element (6) and the edge (16) of the support (12) allow more than half of the information carrier (10) to protrude outside the housing (1).

7. Device according to claim 6, **characterized in that**, when the information carrier (10) is a disc, its central hole (10A) is presented outside the housing (1).

8. Device according to any of the preceding claims, **characterized in that** the movement of the support (12) is actuated by powered means (42; 58, 68; 96, 108, 110).

9. Device according to any of the preceding claims, **characterized in that** the support (12) bears a stud (34) cooperating with a groove (36, 40) made in a wall (7B) of the housing (1) parallel to the support (12) to form a ratchet (40A) locking said support (12) in storage position.

10. Device according to any of the claims 2 to 9, **characterized in that** the support (12) is actuated by a slider (58, 96) movable between two positions and having a groove (62, 94) engaging its stud (17).

11. Device according to any of the preceding claims, **characterized in that** the support (12) bears at least a flexible leg (15, 90) cooperating with the periphery of the information carrier (10) to lock it against the internal edge (13) of said support.

12. Device according to claim 11, **characterized in that** the flexible leg (15) occupies two positions representing the presence, respectively the absence of an information carrier (10) on said support (12).

13. Device according to claim 11 or 12, **characterized in that** the flexible leg (15) has an extremity (15B) projecting from the support (12) or its edge (19) and/or the front wall (5) of the housing (1) for providing a visual and/or tactile indication of the presence, respectively absence of an information carrier (10).

14. Device according to claim 8 and incorporated in a play/record unit, **characterized in that** the slider (58, 96) is controlled by powered means (68, 110) which shift the driving (54) and play/record (56) means of said unit into operative position where the information carrier (10) is moved away from the support (12) for free rotation.

## Patentansprüche

1. Lager- und Überführungsvorrichtung für einen scheibenartigen Informationsträger (10), die ein Wände (2, 3, 4, 7B) enthaltendes Gehäuse (1, 88) sowie eine Stütze (12), die einen Abschnitt des Umfangs des Informationsträgers (10) aufnimmt, umfasst, wobei die Stütze in einer zu einer Wand (7B) des Gehäuses (1) im Wesentlichen parallelen Ebene beweglich ist, **dadurch gekennzeichnet, dass** sie Mittel (20, 8, 17) enthält, die eine Rollbewegung sicherstellen, ohne dass die Stütze (12) in Bezug auf das Gehäuse (1) gleitet.

2. Vorrichtung nach Anspruch 1, **dadurch gekennzeichnet, dass** die Rollbewegung der Stütze (12) durch einen Zapfen (17) an der Stütze geführt ist, der in eine Nut (8) in der zu der Stütze (12) parallelen Wand (7B) des Gehäuses (1) eingreift.

3. Vorrichtung nach einem der vorhergehenden Ansprüche, **dadurch gekennzeichnet, dass** die Rollbewegung der Stütze (12) durch eine Umfangsverzahnung gesteuert wird, die an ihrem Aussenrand (16) und an einem Element (6) einer Umfangswand (4) angeordnet ist.

4. Vorrichtung nach Anspruch 3, **dadurch gekennzeichnet, dass** das Element (6) ein gekrümmtes Profil hat.

5. Vorrichtung nach Anspruch 3, **dadurch gekennzeichnet, dass** das Element (6) ein geradliniges Profil hat und der Aussenrand (16) der Stütze (12) eine Krümmung hat, die sich von jener ihres Innenrands (13) unterscheidet.

6. Vorrichtung nach Anspruch 4 oder 5, **dadurch gekennzeichnet, dass** die Profile des Elements (6) und des Rands (16) der Stütze (12) erlauben, dass mehr als die Hälfte des Informationsträgers (10) ausserhalb des Gehäuses (1) vorsteht.

7. Vorrichtung nach Anspruch 6, **dadurch gekennzeichnet, dass**, wenn der Informationsträger (10) eine Scheibe ist, sein Mittelloch (10A) ausserhalb des Gehäuses (1) freiliegt.

8. Vorrichtung nach einem der vorhergehenden Ansprüche, **dadurch gekennzeichnet, dass** die Bewegung der Stütze (12) durch Antriebsmittel (42; 58, 68; 96, 108, 110) betätigt wird.

9. Vorrichtung nach einem der vorhergehenden Ansprüche, **dadurch gekennzeichnet, dass** die Stütze (12) einen Zapfen (34) trägt, der mit einer Nut (36, 40) zusammenwirkt, die in einer zu der Stütze (12) parallelen Wand (7B) des Gehäuses (1) hergestellt ist, um ein die Stütze (12) in der Lagerstellung sperrendes Sperrhaken (40A) zu bilden.

10. Vorrichtung nach einem der Ansprüche 2 bis 9, **dadurch gekennzeichnet, dass** die Stütze (12) durch einen Schieber (58, 96) betätigt wird, der zwischen zwei Stellungen bewegbar ist und eine an deren Zapfen (17) angreifende Nut (62, 94) aufweist.

11. Vorrichtung nach einem der vorhergehenden Ansprüche, **dadurch gekennzeichnet, dass** die Stütze (12) zumindest ein flexibles Bein (15, 90) trägt, das mit dem Umfang des Informationsträgers (10) zusammenwirkt, um ihn gegen den Innenrand (13) der Stütze zu sperren.

12. Vorrichtung nach Anspruch 11, **dadurch gekennzeichnet, dass** das flexible Bein (15) zwei Stellungen einnimmt, die das Vorhandensein bzw. das Fehlen eines Informationsträgers (10) an der Stütze (12) repräsentieren.

13. Vorrichtung nach Anspruch 11 oder 12, **dadurch gekennzeichnet, dass** das flexible Bein (15) ein Ende (15B) aufweist, das von der Stütze (12) oder dessen Rand (19) und/oder der Vorderwand (5) des Gehäuses (1) vorsteht, um eine sichtbare und/oder fühlbare Anzeige des Vorhandenseins bzw. Fehlens eines Informationsträgers (10) vorzusehen.

14. Vorrichtung nach Anspruch 8, die in einer Abspiel-/Aufzeichnungseinheit eingebaut ist, **dadurch gekennzeichnet, dass** der Schieber (58, 96) durch Antriebsmittel (68, 110) gesteuert wird, die das Antriebs- (54) und Abspiel-/Aufzeichnungs- (56) Mittel der Einheit in eine Betriebsstellung verschieben, wo der Informationsträger (10) von der Stütze (12) zur freien Drehung wegbewegt wird.

## Revendications

1. Dispositif de stockage et transfert pour porteur d'informations (10) en forme de disque comprenant un boîtier (1, 88) muni de parois (2, 3, 4, 7B) et un support (12) recevant une partie de la périphérie dudit porteur d'informations (10), ledit support étant mobile dans un plan substantiellement parallèle à une paroi (7B) dudit boîtier (1), **caractérisé en ce qu'**il comprend des moyens (20, 8, 17) assurant un mouvement de roulement sans glissement du support (12) par rapport audit boîtier (1).

2. Dispositif selon la revendication 1, **caractérisé en ce que** le mouvement de roulement du support (12) est guidé par un téton (17) sur ledit support coopérant avec un sillon (8) dans la paroi (78) du boîtier (1) parallèle audit support (12).

3. Dispositif selon l'une quelconque des revendications précédentes, **caractérisé en ce que** le mouvement de roulement du support (12) est contrôlé par des dentures périphériques situées sur son bord externe (16) et sur un élément (6) d'une paroi périphérique (4).

4. Dispositif selon la revendication 3, **caractérisé en ce que** l'élément (6) possède un profil incurvé.

5. Dispositif selon la revendication 3, **caractérisé en ce que** l'élément (6) a un profil rectiligne et le bord externe (16) du support (12) une courbure différente de celle de son bord interne (13).

6. Dispositif selon la revendication 4 ou 5, **caractérisé en ce que** les profils de l'élément (6) et du bord (16) du support (12) permettent à plus de la moitié du porteur d'informations (10) de dépasser du boîtier (1).

7. Dispositif selon la revendication 6, **caractérisé en ce que**, lorsque le porteur d'informations (10) est un disque, son orifice central (10A) est situé à l'extérieur du boîtier (1).

8. Dispositif selon l'une quelconque des revendications précédentes, **caractérisé en ce que** le mouvement du support (12) est actionné par des moyens d'entraînement (42 ; 58, 68 ; 96, 108, 110).

9. Dispositif selon l'une quelconque des revendications précédentes, **caractérisé en ce que** le support (12) porte un téton (34) coopérant avec un sillon (36, 40) pratiqué dans une paroi (7B) du boîtier (1) parallèle au support (12) pour former un cliquet (40A) verrouillant ledit support (12) en position de stockage.

10. Dispositif selon l'une quelconque des revendications 2 à 9, **caractérisé en ce que** le support (12) est actionné par une glissière (58, 96) déplaçable entre deux positions et portant un sillon (62, 94) coopérant avec son téton (17).

11. Dispositif selon l'une quelconque des revendications précédentes, **caractérisé en ce que** le support (12) porte au moins une patte flexible (15, 90) coopérant avec la périphérie du porteur d'informations (10) pour le bloquer contre le bord interne (13) dudit support.

12. Dispositif selon la revendication 11, **caractérisé en ce que** la patte flexible (15) occupe deux positions représentant la présence, respectivement l'absence d'un porteur d'informations (10) sur ledit support (12).

13. Dispositif selon la revendication 11 ou 12, **caractérisé en ce que** la patte flexible (15) a une extrémité (15B) dépassant du support (12) ou de son rebord (19) et/ou de la paroi frontale (5) du boîtier (1) pour fournir une indication visuelle et/ou tactile de la présence, respectivement l'absence d'un porteur d'informations (10).

14. Dispositif selon la revendication 8 et incorporé dans un appareil de reproduction/enregistrement, **caractérisé en ce que** la glissière (58, 96) est commandée par des moyens motorisés (68, 110) qui déplacent les moyens d'entraînement (54) et de reproduction/enregistrement (56) dudit appareil en position opérative où le porteur d'informations (10) est écarté du support (12) pour une libre rotation.
